(19) Europäisches Patentamt
European Patent Office
Office européen des brevets

(11) **EP 4 714 758 A1**

(12) **EUROPEAN PATENT APPLICATION**
published in accordance with Art. 153(4) EPC

(43) Date of publication:
**25.03.2026 Bulletin 2026/13**

(21) Application number: **24803493.6**

(22) Date of filing: **08.05.2024**

(51) International Patent Classification (IPC):
***B60S 1/38*** *(2006.01)*

(52) Cooperative Patent Classification (CPC):
**B60S 1/38**

(86) International application number:
**PCT/JP2024/017086**

(87) International publication number:
**WO 2024/232384 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 JP 2023077450**

(71) Applicant: **Canon Kabushiki Kaisha**
**Tokyo, 146-8501 (JP)**

(72) Inventors:
- **MORI, Hironori**
  **Tokyo 146-8501 (JP)**
- **FURUKAWA, Takumi**
  **Tokyo 146-8501 (JP)**
- **MATSUDA, Hidekazu**
  **Tokyo 146-8501 (JP)**
- **AOYAMA, Takehiko**
  **Tokyo 146-8501 (JP)**
- **KODAMA, Katsuya**
  **Tokyo 146-8501 (JP)**

(74) Representative: **TBK**
**Bavariaring 4-6**
**80336 München (DE)**

(54) **WIPER BLADE RESTORATION METHOD, RESTORATION SYSTEM, PROGRAM, AND INFORMATION RECORDING MEDIUM**

(57) This wiper blade restoration method is characterized by comprising: a measurement step for measuring the length of a tip of a wiper blade; a determination step for determining whether the tip of the wiper blade can be cut, on the basis of the length measured in the measurement step; and a removal step for removing at least a portion of the tip of the wiper blade if it is determined, during the determination, that the tip of the wiper blade can be cut.

FIG. 2

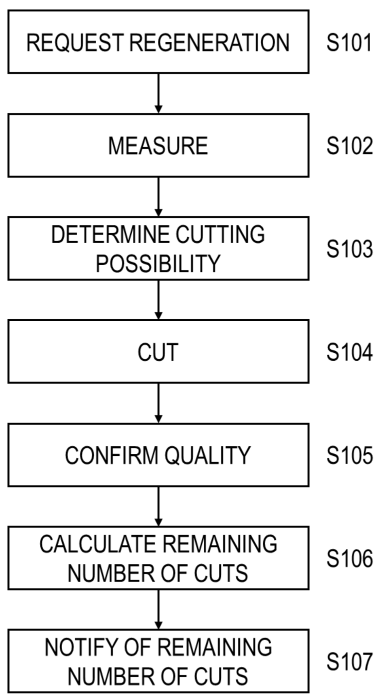


EP 4 714 758 A1

## Description

[Technical field]

The present disclosure relates to a wiper blade regeneration system and a wiper blade regeneration method in a wiper that cleans a wiping target such as a windshield of a conveying device (hereinafter also simply referred to as a "vehicle") such as an automobile, a railway vehicle, an aircraft, or a ship.

[Background Art]

A blade rubber in a wiper blade of a vehicle wears away at a contact portion contacting with a windshield at a tip of the blade rubber due to long-term use, and this causes uneven wiping or the like. Patent Document 1 discloses a regeneration cutter for cutting and regenerating the tip of a blade rubber of which wiping performance has deteriorated due to long-term use of a wiper blade.

[Citation List]

[Patent Document]

[Patent Document 1] Japanese Patent Application Laid-open No. 2006-174980

[Summary of Invention]

[Technical Problem]

The wiper blade can be regenerated a plurality of times by cutting the tip of the blade rubber, but there is a limitation to the number of times regeneration is possible. When the wiper blade is regenerated beyond the limitation, the tip of the blade rubber becomes too short, as a result, desired wiping performance cannot be obtained. Accordingly, it is desirable to be able to determine whether the wiper blade can be regenerated.

At least one aspect of the present disclosure is directed to providing a wiper blade regeneration method and a wiper blade regeneration system capable of providing a high-quality regenerated wiper blade. Moreover, at least one aspect of the present disclosure is directed to providing a program and an information recording medium capable of providing a high-quality regenerated wiper blade. Also, in the present disclosure, for example, the description such as "at least one selected from the group consisting of XX, YY and ZZ" means any of XX, YY, ZZ, a combination of XX and YY, a combination of XX and ZZ, a combination of YY and ZZ, or a combination of XX, YY and ZZ.

[Solution to Problem]

According to at least one aspect of the present disclosure provides a wiper blade regeneration method comprising:

a measurement step of measuring a length of a tip of a wiper blade;
a determination step of determining whether the tip of the wiper blade is cuttable based on the length measured in the measurement step; and
a removal step of removing at least a part of the tip of the wiper blade when determination is made that the tip of the wiper blade is cuttable in the determination.

According to at least one aspect of the present disclosure provides a regeneration system regenerating a wiper blade mounted on a vehicle, the regeneration system comprising:

acquisition means for acquiring a length between a base portion and a tip of the wiper blade;
determination means for determining, based on the length, whether the wiper blade is cuttable; and
a cutting device that cuts a tip of the wiper blade when the determination means determines that cutting is possible; and
notification means for issuing a notification that cutting is not possible when the determination means determines that cutting is not possible, and issuing a notification about a remaining number of times the cutting is possible, based on the length between the base portion and the tip after the cutting when the determination means has determined that cutting is possible and the cutting device has performed cutting.

Further, according to at least one aspect of the present disclosure provides a program causing a computer to execute each step of the above regeneration method.
Furthermore, according to at least one aspect of the present disclosure provides a computer-readable information recording medium on which the above program is recorded.

[Advantageous Effects of Invention]

According to at least one aspect of the present disclosure, it is possible to provide a regeneration method and a regeneration system capable of appropriately regenerating a wiper blade. According to at least one aspect of the present disclosure, there are provided a program and an information recording medium capable of providing a high-quality regenerated wiper blade.

[Brief Description of the Drawings]

[Fig. 1] Fig. 1 is a diagram illustrating a configuration of a wiper device.
[Fig. 2] Fig. 2 is a diagram illustrating a wiper device regeneration method.
[Fig. 3] Fig. 3 is a diagram illustrating a step of measuring a blade rubber.
[Fig. 4] Fig. 4 is a diagram illustrating a configuration of a wiper device regeneration system.
[Fig. 5] Fig. 5 is a diagram illustrating a configuration of a control device in the regeneration system.
[Fig. 6] Fig. 6 is a diagram illustrating a configuration of a cutting device of the blade rubber.
[Fig. 7] Fig. 7 is a diagram illustrating a configuration of a cutting device of the blade rubber.
[Fig. 8] Fig. 8 is a diagram illustrating a configuration of a cutting device of the blade rubber.

[Description of Embodiments]

In the present disclosure, descriptions such as "one embodiment" and "a certain embodiment" do not necessarily refer to the same embodiment even when a plurality of embodiments appear, and may refer to different embodiments.
In the present disclosure, description of "from XX to YY" and "XX to YY" representing a numerical range means a numerical range including a lower limit and an upper limit which are endpoints, unless otherwise mentioned. When numerical ranges are described step by step, the upper limits and lower limits of the numerical ranges can be combined arbitrarily.
Hereinafter, embodiments for carrying out the present disclosure will be specifically exemplified with reference to the drawings. However, it is to be understood that dimensions, materials, shapes, relative arrangements, and the like of components described in the embodiments are intended to be changed as deemed appropriate in accordance with configurations and various conditions of members to which the present disclosure is to be applied. That is, the scope of the present disclosure is not intended to be limited to the embodiments to be described below. In the following description, components that have the same functions are denoted by the same reference signs in the drawings, and the description thereof may be omitted.

1. Structure of Wiper Device

First, a wiper device, particularly a wiper rubber, will be described. The configuration of the wiper device to be described below is a general configuration and is not intended to limit the wiper device or the wiper rubber that can be applied to a regeneration method according to the present disclosure to this configuration.
The wiper device can be used as a wiping target, such as a vehicle typified by an automobile, a transport apparatus such as an airplane and a ship, and an apparatus such as an industrial machinery apparatus such as a construction machine. The transportation apparatuses and industrial machine apparatuses are also collectively referred to as vehicles below. A wiper device can be applied to a windshield of a vehicle. The windshield is not limited to a front window, and also includes side windows and rear windows.
For example, as illustrated in FIG. 1A, the wiper device includes a wiper arm 30 and a wiper blade 20 attached to the wiper arm 30. The wiper blade 20 includes a blade rubber 10 and a blade stay 21 that supports the blade rubber 10.
As illustrated in FIG. 1B, the blade rubber 10 includes a base portion 1 that is an attachment portion of the blade rubber 10 to the blade stay 21, a neck portion 2, and a lip portion 3 which is rockably connected to the base portion 1 via the neck portion 2. The wiper blade is formed in a substantially cross-sectional shape uniform in the longitudinal direction.
On a cross section in a direction orthogonal to the longitudinal direction of the wiper blade, the lip portion 3 includes a shoulder extending laterally from the neck portion at an end of the lip portion 3 on the neck portion side. Further,

in order to stabilize a contact posture of the wiper blade, the wiper blade may have a tapered portion 4 of which a width from a side close to the base portion 1 in a direction away from the base portion 1 gradually decreases. The degree of gradual reduction of the width of the tapered portion 4 may be changed stepwise. For example, the lip portion 3 may have a lip portion tip in which the degree of gradual reduction of the width of the tapered portion decreases on the side closer to the tip away from the base portion 1 of the lip portion. The lip portion tip may have portions with the same or substantially the same width from the side closer to the base portion 1 toward the tip. The wiper blade illustrated in FIG. 1B has a plate-like portion continuous with the tapered portion 4 on the tip side of the lip portion 3.

The wiper device cleans the surface of a cleaning target member by bringing at least a part of the tip of the lip portion 3 into contact with the surface of the windshield that is a cleaning target member typified by a glass surface. Accordingly, at least the part of the tip of the lip portion 3 forms a contact portion with the windshield.

For example, on a cross section in a direction orthogonal to the longitudinal direction of the wiper blade, the neck portion 2 may have a narrower width than the base portion 1 and the lip portion 3. For example, the lip portion is an elastic body. Accordingly, the lip portion 3 is inclined in a wiping direction, and at least a part of the lip portion 3 is brought into contact with the surface of the cleaning target member.

As illustrated in FIG. 1B, the lip portion 3 has a first side surface 5, a second side surface 6, and a tip surface 7. Both the first side surface 5 and the second side surface 6 are continuous with the tapered portion 4, and the first side surface 5 and the second side surface 6 are located opposite to each other. The tip surface 7 forms a first edge 8 and a second edge 9 together with the first side surface 5 and the second side surface 6 on a side farthest from the base portion 1 of the lip portion 3. The part of the tip of the lip portion 3 cut by the cutting device (regeneration device) is a portion including at least the tip surface 7.

The contact portion of the lip portion 3 with the windshield wears due to long-term use, and wiping unevenness or the like occurs. Thus, the blade rubber is regenerated by cutting the tip of the lip portion 3.

2. Wiper Blade Regeneration Method

FIG. 2 is a diagram illustrating an overall flow of a wiper blade regeneration method according to an embodiment. Each step will be described below. In the present embodiment, it is assumed that the wiper blade is regenerated by removing at least a part of the tip of the wiper blade by cutoff, but the regeneration may also be performed by removal through cutting. That is, in the following description, "cutoff" may be read as "cutting".

S101: Regeneration Requesting Process

Step S101 is a step in which a user (operator) of the wiper device requests regeneration of the wiper blade from a regeneration service provider. Here, it is assumed that the user of the wiper device and an entity performing regeneration processing are different from each other, and the term "request" is described, but the user of the wiper device and the entity may be the same.

A trigger for a user to recognize necessity of regeneration of the wiper blade is, for example, the following event.

First, an example in which a user notices necessity of regeneration by himself or herself will be described. When the wiping unevenness or unwiped portions (streaks) remain after use of the wiper device, the user can recognize deterioration in wiping performance of the wiper blade, and intends to regenerate the wiper blade. The user may recognize by himself or herself that a recommended regeneration time notified of in advance has arrived. The user may recognize that the recommended regeneration time has arrived using a time indicator seal (label) attached to the wiper device or the vicinity of the wiper device. The time indicator seal is a seal (label) capable of visualizing passage of a predetermined time, for example, by a change in color. By attaching a new seal at the time of most recent regeneration (including a new wiper blade and the same applies below), the user can easily ascertain the passage of time from that time to the recommended regeneration time.

Next, an example in which the user is notified of necessity of regeneration and notices the necessity of the regeneration will be described. For example, a device (in-vehicle unit) in a vehicle or a device attached to the vehicle may detect that a recommended regeneration time has arrived and notify the user of the detection (fifth notification step). The device can be determined based on, for example, the number of days passed from a previous time of regeneration, a travel distance of the vehicle after regeneration (after replacement with a new wiper blade), the number of operations for the wiper device after the regeneration (after replacement with a new wiper blade), a load of a drive motor of the wiper device, and detection of wiping unevenness or unwiped portions (streaks) by a camera or a sensor installed inside a windshield. The notification by the in-vehicle unit can be performed using, for example, a monitor (display) or a lamp mounted on the vehicle.

A server device managed by a vehicle manufacturer, a regeneration service provider, or the like may detect that a preset recommended regeneration time has arrived and notify the user (fifth notification step). The server device can recognize the arrival of the recommended regeneration time by storing a next recommended regeneration time or

receiving a notification indicating the arrival of the recommended regeneration time from the in-vehicle unit. When the recommended regeneration time has arrived, the server device may notify the user using a phone, an electronic mail, or an SNS, may notify the user through an application installed in a user terminal (for example, a smartphone terminal), or may notify the user through a monitor mounted on the vehicle. At this time, the server device may select at least one regeneration facility from a plurality of regeneration facilities based on an attribute of the user and notify the user of the selected regeneration facility. Examples of the attribute of the user include a position of a user's home, a current location, a regeneration facility having a use history, a condition of a desired regeneration facility, and a desired regeneration service provider. Based on such attribute information, the server device may select and present, for example, a regeneration facility close to the user's home or the current location of the vehicle, a regeneration facility having a use history, or a regeneration facility operated by the desired regeneration service provider to the user.

When the user requests the regeneration service provider to regenerate the wiper device, at least the blade rubber may be handed over to the regeneration service provider. For example, the user may bring a vehicle to the regeneration service provider or may bring or mail only the wiper device or the blade rubber to the regeneration service provider. Alternatively, the user may request the regeneration service provider to pick up the vehicle, the wiper device, or the blade rubber.

S102: Step of Measuring Blade Rubber

Step S102 is a measurement step of measuring a length between the base portion and the tip of the blade rubber as information for determining whether cutting of the blade rubber is possible. When the blade rubber is attached to the blade stay of the wiper blade, a regeneration execution operator of the regeneration facility who has received the regeneration request removes the blade rubber from the blade stay. Then, the regeneration execution operator measures the length between the base portion and the tip in the longitudinal direction of the blade rubber using a measurement device, and outputs a shortest length. The regeneration execution operator may be a regeneration service provider, or may be an owner of a vehicle.

FIG. 3 is a diagram illustrating measurement points in step S102. In one embodiment, in step S102, the length L1 from the end on the bottom surface side of the base portion 1 to the tip surface 7 is measured. As will be described below, a length used for cutting possibility determination of the blade rubber is a length L of the tip of the blade rubber that can be a contact portion with the windshield. Hereinafter, the length L is also referred to as a length of the tip of the lip portion. In the blade rubber that has the configuration illustrated in FIG. 3, the length L corresponds to a length between the end of the side surfaces 5 and 6 on the bottom surface side and the tip surface 7. The length L is obtained by subtracting, from the length L1, a length L2 between the end on the bottom surface side of the base portion 1 and the end of the side surfaces 5 and 6 on the bottom surface side, which is constant for each blade rubber. In another embodiment, the length L may be directly measured in step S102. In still another embodiment, another length including the lip portion tip, for example, a length of the entire lip portion 3, may be measured.

The measurement device used in step S102 is, for example, a laser measurement instrument. The laser measurement instrument may be integrated with or separate from a cutting machine to be described below. The measurement in step S102 may also be performed without removing the blade rubber from the blade stay.

S103: Cutting Possibility Determination Step

Step S103 is a determination step of determining whether cutoff (cutting) of the blade rubber is possible. In this step, a minimum value of the length of the tip of the lip portion is obtained. When the minimum value is greater than a threshold, it is determined that cutoff is possible (cutting is possible). Otherwise, it is determined that the cutoff is not possible (the cutting is not possible).

In one embodiment, a control device included in a regeneration system subtracts a predetermined length L2 for each type of blade rubber from the length L1 obtained in step S102 to calculate a shortest length of the tip of the lip portion (a minimum value of the length of the tip of the lip portion). Then, the control device compares the shortest length of the tip of the lip portion with a threshold Lth, determines that cutting is possible when the shortest length of the tip of the lip portion is greater than the threshold Lth, and determines that cutting is not possible otherwise. When cutting is possible, the control device calculates a cutting position. The cutting position is expressed as, for example, a length from the end on the bottom surface side of the base portion 1 and is obtained by subtracting a cutting margin (cutout margin) from the shortest length of the tip of the lip portion. The cutting margin may be a predetermined value or may be determined based on either or both of a model of the blade rubber and a model of the cutting device. As an example, the cutting margin can be set to 0.1 mm with respect to a new lip length of 1.4 mm.

The acquisition of the model of the blade rubber with the control device may be performed, for example, by causing a reading device to read a barcode, a two-dimensional code, or an RFID tag attached to the blade rubber or by manual input of the same into the control device by a regeneration execution operator. The control device acquires the

length L2 and the threshold Lth based on the model from a database that stores the model of the blade rubber, the length L2, and the threshold Lth in association, and performs the above-described processing.

The control device may determine whether to perform the subsequent processing according to the determination result of the cutting possibility determination or may output the determination result such that the regeneration execution operator can ascertain the determination result and the regeneration execution operator may be allowed to determine whether to perform the subsequent processing. When it is determined that cutting is possible, the processing proceeds to step S104. When it is determined that cutting is not possible, the processing stops and the blade rubber is exchanged after confirmation by the user. When it is determined that cutting is not possible, the control device performs a step (first notification step) of notifying the regeneration execution operator or the user that regeneration of the blade rubber is not possible.

In one embodiment, the process of step S103 may be performed by the regeneration execution operator. That is, the regeneration execution operator may calculate the shortest length of the tip of the lip portion by subtracting the predetermined length L2 for each model of the blade rubber from the length L1 obtained in step S102, and compare the shortest length of the tip of the lip portion with the threshold Lth to determine whether cutting is possible. The regeneration execution operator determines whether to perform the subsequent processing based on whether cutting is possible.

S104: Step of Cutting Tip of Blade Rubber

Step S104 is a step of cutting at least a part of the tip of the blade rubber to restore the wipability. This step can also be ascertained as a removal step of removing at least a part of the tip of the blade rubber. In step S104, the blade rubber is cut using a cutting device so that the length of the tip of the lip portion has a constant value in the longitudinal direction, and the tip surface of the lip portion is made flat to restore the wipability. As described above, the tip of the blade rubber may be removed through cutting instead of or in addition to the cutoff.

Step S104 includes steps of installing the blade rubber in the cutting device, adjusting a cutting position, and instructing the cutting device to start cutting. All of these steps may be performed automatically by the cutting system, or some or all of the steps may be performed by the regeneration execution operator. As an example in which some of the steps are manually performed, for example, the regeneration execution operator installs the blade rubber in the cutting device, and inputs a cutting position (or a shortest length of the lip portion) to the control device. Thereafter, the control device issues a command to the cutting device to adjust the cutting device to a predetermined cutting position, and issues a cutting start command to the cutting device when the adjustment is completed.

S105: Step of Confirming Quality (Wiping Performance)

Step S105 is a step of confirming that the wiping performance is restored by cutting the tip of the blade rubber. As a method of confirming the wiping performance, there are a method based on a variation in the length of the tip of the lip portion and a method based on a result obtained by actually cleaning a windshield. The wiping performance may be confirmed by only one of the two methods, or the wiping performance may be confirmed by both the methods.

In the case of the confirmation based on the variation in the length of the tip of the lip portion, the measurement device measures a length between the end on the bottom surface side of the base portion 1 and the tip surface 7 in the longitudinal direction of the blade rubber by the same scheme as that of step S102. The control device receives a measurement result, obtains a score indicating flatness of the tip surface based on, for example, one or both of a difference between maximum and minimum lengths and a variance value of the length, and performs quality confirmation by comparison with a predetermined quality assurance reference score.

In the case of the confirmation based on an actual cleaning result, the blade rubber is attached to the wiper device of the vehicle to clean the windshield. A cleaning target may not be a windshield of a vehicle and may be a testing wiping target. A regeneration execution operator may visually confirm a cleaning result to determine acceptance or rejection, or a cleaned windshield may be imaged with a camera and an inspection device may determine an inspection result through image processing. In the image processing, it may be determined whether the wiping unevenness or the unwiped portion is generated.

When it is determined that the wiping performance has not been restored, the processing returns to step S102 to perform cutting again. When it is determined that the wiping performance has been restored, the processing proceeds to step S106.

S106: Step of Calculating Remaining Number of Cuts

Step S106 is a process of calculating the remaining number of times the blade rubber can be cut (the number of times cutting is possible), in other words, the remaining number of times regeneration is possible, based on the length of the tip of the blade rubber after cutting (after cutting or after removal). The remaining number of cuts can be obtained by

dividing the length of the tip of the lip portion after cutting by the length of a cutting margin. That is, remaining number of cuts = length of tip of lip portion/cutting margin.

When the cutting position is determined in step S103, a value obtained by subtracting the cutting margin from the shortest length of the tip of the lip portion before cutting is obtained. Therefore, this value can be used as the length of the tip of the lip portion after cutting. Alternatively, when the length of the tip of the lip portion is measured in the longitudinal direction in the step of confirming the quality in step S105, the value of the measured length (constant value within a range of a cutting error) can be used as the length of the tip of the lip portion after cutting. Alternatively, in this step, the length of the tip of the lip portion in the longitudinal direction may be obtained using a measurement device, and the measured value may be used as the length of the tip of the lip portion after cutting. Alternatively, using the shortest length of the tip of the lip portion obtained in step S102, the remaining number of cuts can be determined as {(shortest length of the tip of the lip portion measured in step S101)/(cutting margin) -1}.

In one embodiment, the control device performs the above calculation to calculate the remaining number of cuts. In another embodiment, the regeneration execution operator performs the above calculation to calculate the remaining number of cuts.

S107: Step of Notification about Remaining Number of Cuts

Step S107 is a step of issuing a notification about the remaining number of times the blade rubber can be cut (second notification step), in other words, the remaining number of times regeneration is possible, in a format which the regeneration execution operator or the user can understand. A method of issuing a notification about the remaining number of cuts is not particularly limited, and any method can be adopted.

The remaining number of cuts can be notified of by any of various methods. For example, the remaining number of cuts can be notified of through displaying on a display, printing on a seal (label), or outputting (displaying or printing) a barcode or a two-dimensional code including the information, or writing the information on an RFID tag. As an example, a printing device included in the regeneration system prints the remaining number of cuts on a seal (label). The regeneration execution operator attaches the seal to the wiper device or the vehicle so that the user can ascertain the remaining number of cuts. Instead of directly printing the remaining number of cuts, a barcode or a two-dimensional code including the remaining number of cuts as information may be printed on a seal and output, or information may be written on an RFID tag. On the barcode or the like, not only the remaining number of cuts but also other information such as a next recommended cutting time, the number of cuts (the number of regenerations), and a model/individual identification number of the blade rubber may also be stored. Alternatively, the regeneration system may display the remaining number of cuts or the like to notify the regeneration execution operator, and the regeneration execution operator may operate the printing device to print the remaining number of cuts on the seal or handwrite the remaining number of cuts on the seal.

The information of which the user is notified is not limited to the remaining number of cuts, and the next recommended cutting time, and other information may be notified. The recommended cutting time, the number of cuts, and the like may be printed on the seal similarly to the remaining number of cuts. The regeneration execution operator may attach a maintenance indicator seal corresponding to the recommended cutting time to the wiper device or the vehicle.

In addition to the above, the notification to the user can be performed via an application installed in the user terminal. For example, the regeneration execution operator may operate the control device or another computer to transmit information such as the remaining number of cuts, the recommended cutting time, and the number of cuts to the application, or the control device may automatically transmit information to the application. The regeneration execution operator or the control device may record information such as the remaining number of cuts, the recommended cutting time, and the number of cuts in an in-vehicle unit mounted on the vehicle, and display the pieces of information on an in-vehicle monitor.

The notification to the user may be performed via a server device managed by a vehicle manufacturer, a regeneration service provider, or the like. When the control device or the regeneration execution operator registers the remaining number of cuts, the recommended cutting time, and the number of cuts in the server device, the server device may notify the user of the pieces of information using a phone, an electronic mail, or an SNS, or may notify an application installed in the user terminal of the pieces of information.

In one embodiment, instead of or in addition to issuing the notification about the remaining number of cuts, a step of notifying the regeneration execution operator or the user of the length of the tip of the blade rubber after cutting (third notification step) may be included. In one embodiment, instead of or in addition to the notification of the remaining number of cuts, a step of notifying the regeneration execution operator or the user of the next recommended cutting time (recommended regeneration time) (fourth notification step) may be included.

3. Configuration of Regeneration System

FIG. 4 is a diagram illustrating an overall configuration of a regeneration system according to an embodiment.

The regeneration system includes a control device 100, a cutting device 200, a measurement device 300, a seal printing device 400, and an RFID reader/writer 500. The control device 100 is communicably connected to a vehicle 600, a user terminal 700, and a server device 800 via a network.

The control device 100 performs overall control of regeneration processing, and performs control command transmission, information reception, and the like with the cutting device 200, the measurement device 300, the seal printing device 400, and the RFID reader/writer 500. The control device 100 is, for example, a computer (information processing device) that includes a CPU 110, a storage unit 120, a communication unit 130, and an input/output unit 140. The control device 100 may be a plogrammable logic controller (PLC).

FIG. 5 is a block diagram illustrating a functional configuration of the control device 100. As illustrated in the drawing, the control device 100 includes a lip portion tip length acquisition unit 41, a cutting possibility determination unit 42, a cutting instruction unit 43, a quality inspection unit 44, a remaining number-of-cuts calculation unit 45, a remaining number-of-cuts output unit 46, and a notification unit 47 as functional units. The functional units are implemented by the CPU 110 executing a program stored in the storage unit 120. Some or all of the functional units may be implemented by a dedicated hardware device. Details of the functional units will be described below. The storage unit 120 functions as, for example, a computer-readable recording medium. The computer-readable recording medium according to the present disclosure may include, but is not limited to, an electronic, magnetic, optical, electromagnetic, infrared, or semiconductor system, apparatus, or device, or any of appropriate combinations of the above content. More specific examples of the foregoing recording medium include a hard disk, a random access memory (RAM), a read-only memory (ROM), an erasable programmable read-only memory (an EPROM or a flash memory), an optical fiber, a portable compact disc read-only memory (CD-ROM), an optical storage device, a magnetic storage device, or any of appropriate combinations of the above.

The cutting device 200 is a device that cuts the tip of the lip portion of the blade rubber. Details of the configuration of the cutting device 200 will be described below.

The measurement device 300 is a device that measures a length between the end of the base portion 1 of the blade rubber on the bottom surface side and the tip surface of the lip portion in the longitudinal direction. The measurement device 300 is, for example, a laser measurement device. In FIG. 4, the measurement device 300 and the cutting device 200 are illustrated as separate devices, but an integrated device capable of measuring and cutting may be used.

The seal printing device 400 is a device that prints or prints information to be conveyed to the user on a seal, such as the remaining number of cuts for the blade rubber, a next recommended cutting time, and the number of cuts. The seal printing device 400 may print the information to be conveyed to the user on the seal in the form of a barcode or a two-dimensional code.

The RFID reader/writer 500 is a device that reads information from the RFID tag and writes information on the RFID tag. For example, the RFID reader/writer 500 reads a model of the blade rubber and other information stored on the RFID tag, and uses the read information for the regeneration processing. The RFID reader/writer 500 writes, on the RFID tag, information to be conveyed to the user, such as the remaining number of cuts for the blade rubber, the next recommended cutting time, and the number of cuts, or information useful for the next regeneration processing and determination of necessity of regeneration.

The vehicle 600 is a vehicle owned by the user who requests regeneration of the blade rubber. The vehicle 600 includes a wiper device 610, an in-vehicle display (monitor) 620, a sensor 630, and an in-vehicle unit 640. The wiper device 610 includes a blade rubber to be regenerated. The in-vehicle display 620 is provided inside the vehicle 600, and presents information to a driver or another passenger. The sensor 630 includes a sensor that acquires various types of information regarding the vehicle 600, for example, a travel distance, a travel speed, acceleration, a travel azimuth, a weather condition, and the like. The in-vehicle unit 640 can communicate with the wiper device 610, the in-vehicle display 620, and the sensor 630 via an in-vehicle network. As an example, based on information acquired from the sensor 630 or a time passed from previous regeneration, the in-vehicle unit 640 determines whether a recommended regeneration time of the blade rubber has arrived. When the recommended regeneration time has arrived, the in-vehicle unit 640 notifies the user of the arrival of the recommended regeneration time via the in-vehicle display 620 or the user terminal 700.

The user terminal 700 is, for example, a smartphone terminal, a tablet terminal, or a personal computer. The user terminal 700 notifies the user of the arrival of the rubber blade recommended regeneration time based on the notification from the server device 800 or the in-vehicle unit 640. When the recommended regeneration time has arrived, the user terminal 700 selects at least one regeneration facility from regeneration facilities of a plurality of wiper blades based on an attribute of the user, and notifies the user receiving a nearby regeneration facility from the server device 800 of the selected regeneration facility. Examples of the attribute of the user include a position of a user's home, a current location, a regeneration facility having a use history, a condition of a desired regeneration facility, and a desired regeneration service provider. The user terminal 700 selects, for example, a regeneration facility close to the user's home or the current location of the vehicle, a regeneration facility having a use history, or a regeneration facility operated by a desired regeneration service provider based on such the attribute, and presents the selected regeneration facility to the user. Alternatively, the selection of the regeneration facility may be performed by the server device 800, and the user terminal 700 may present the

regeneration facility of which the server device 800 notifies to the user. Furthermore, the user terminal 700 receives selection of a regeneration facility from the user, and transmits a regeneration request to the selected regeneration facility. When the rubber blade regeneration processing has completed, the user terminal 700 receives, from the server device 800, information such as the completion of the regeneration, the remaining number of cuts (the remaining number of regenerations), and the next recommended regeneration time, and notifies the user of the information. The processing in the user terminal 700 may be executed by a dedicated application.

The server device 800 is a computer that is managed by a regeneration service provider or a vehicle manufacturer. The server device 800 may include one computer or a plurality of computers. The server device 800 receives a user ID, a contact address of the user, a next recommended regeneration time of the blade rubber, and the number of regenerations from the regeneration service provider, and stores the received information in a database in association with the user ID. When the recommended regeneration time has arrived, the server device 800 notifies the user of the arrival of the recommended regeneration time. Examples of the contact method include a phone, an e-mail, an SNS, and a dedicated application installed in the user terminal 700. The server device 800 may notify the user terminal 700 of completion notification when the completion notification of the regeneration processing of the blade rubber is received from a maintenance engineer. The completion notification includes, for example, information such as the remaining number of cuts and the next recommended regeneration time.

Details of Control Device 100

As illustrated in FIG. 5, the control device 100 includes a lip portion tip length acquisition unit 41, a cutting possibility determination unit 42, a cutting instruction unit 43, a quality inspection unit 44, a remaining number-of-cuts calculation unit 45, a remaining number-of-cuts output unit 46, and a notification unit 47.

The lip portion tip length acquisition unit 41 acquires a measurement result of the blade rubber by the measurement device 300 (step S102). As described above, the measurement device 300 measures the length between the end on the bottom surface side of the base portion 1 of the blade rubber and the tip surface of the lip portion in the longitudinal direction. The lip portion tip length acquisition unit 41 outputs a shortest length among the measured lengths to the cutting possibility determination unit 42.

The cutting possibility determination unit 42 determines whether the blade rubber can be cut (regenerated or removed) based on the shortest length received from the lip portion tip length acquisition unit 41 (step S103). Specifically, the cutting possibility determination unit 42 determines that cutting is possible when the shortest length of the tip of the lip portion obtained by subtracting a predetermined length determined in advance for each model of the blade rubber from the received shortest length is greater than a threshold. The cutting possibility determination unit 42 determines that cutting is not possible otherwise. The model of the blade rubber is read based on a label or the like attached to the blade rubber, and a predetermined length corresponding to the model can be acquired from the server device 800. When it is determined that cutting is not possible (removal is not possible), the control device 100 issues a notification about the determination and stops the regeneration processing. When it is determined that cutting is possible (removal is possible), the regeneration processing continues.

The cutting instruction unit 43 instructs the cutting device 200 to cut the tip of the blade rubber (step S104). The cutting instruction unit 43 may perform control such that the blade rubber installed in the measurement device 300 is moved to the cutting device 200 using a conveying device, or may notify the regeneration execution operator so that the blade rubber is installed in the cutting device 200. The cutting instruction unit 43 also notifies the cutting device 200 of the cutting position when the cutting device 200 is instructed to perform cutting. The cutting instruction unit 43 obtains the cutting position as a position where the length of the tip of the lip portion becomes a value obtained by subtracting a predetermined cutting margin from the shortest length of the tip of the lip portion.

The quality inspection unit 44 confirms whether the wiping performance of the blade rubber of which the tip has been cut is restored (step S105). For example, the quality inspection unit 44 acquires the measurement result of the blade rubber by the measurement device 300, and determines whether the predetermined quality assurance reference score is satisfied based on a difference or variance between maximum and minimum values of the length of the tip of the lip portion in the longitudinal direction. Alternatively, the quality inspection unit 44 receives an image of a cleaning result using the blade rubber, and determines whether the wiping performance is restored based on the wiping unevenness and the unwiped portion detected through the image processing. The quality inspection unit 44 may output a quality confirmation result, and may prompt or execute the cutting again when the quality assurance reference is not satisfied.

The remaining number-of-cuts calculation unit 45 calculates how many more times the blade rubber can be cut (step S106). The remaining number of cuts can be calculated based on the shortest length of the tip of the lip portion and the length of the cutting margin acquired by the lip portion tip length acquisition unit 41. For example, the remaining number-of-cuts calculation unit 45 determines the remaining number of cuts as (shortest length of tip of lip portion before cutting)/(cutting margin)-1. Alternatively, the remaining number-of-cuts calculation unit determines the remaining number of cuts as (shortest length of tip of lip portion after cutting)/(cutting margin). The shortest length of the tip of the lip portion

after cutting may be a value obtained by measuring the blade rubber after cutting by the measurement device 300, or may be a value obtained by subtracting the cutting margin from the shortest length of the tip of the lip portion before cutting obtained when the cutting position is determined. The remaining number-of-cuts calculation unit 45 outputs the calculated remaining number of cuts to the remaining number-of-cuts output unit 46.

The remaining number-of-cuts output unit 46 outputs the remaining number of cuts for the blade rubber in such a format that the regeneration execution operator or the user can recognize (step S107). The remaining number-of-cuts output unit 46 prints the remaining number of cuts on the seal or prints a barcode or a two-dimensional code including the remaining number of cuts as information on the seal using the seal printing device 400. Alternatively, the RFID tag is written through the RFID reader/writer 500. The remaining number-of-cuts calculation unit 45 may display the remaining number of cuts on the display or may transmit the remaining number of cuts to the server device 800.

The notification unit 47 notifies the user that the cutting (regeneration) processing for the blade rubber has been completed. The notification unit 47 notifies the user that the blade rubber regeneration processing has been completed via a phone, an e-mail, an SNS, or an application of the user terminal 700. The notification may be performed directly from the notification unit 47 or may be performed via the server device 800. In addition to the completion of the regeneration processing, the notification unit 47 may notify the user or the regeneration execution operator of the remaining number of cuts, the next recommended regeneration time, the number of cuts, and the result of the cutting possibility determination during the regeneration processing. The notification to the user may be performed in the same way as described above, and the notification to the regeneration execution operator may be performed via a display that is an example of the input/output unit 140.

Configuration of Cutting Device 200

The cutting device 200 of the blade rubber according to an aspect of the present disclosure will be described with reference to FIGS. 6, 7A, 7B, 8A, and 8B as an example. The cutting device 200 may also be referred to as a regeneration device that cuts the tip of the blade rubber to generate the blade rubber. The cutting device used in the present disclosure may have a configuration different from that of the cutting device described here.

FIG. 6 is a schematic view illustrating an outer appearance of the cutting device 200 of the blade rubber. FIGS. 7A and 7B are schematic views illustrating a cutting unit 230 including a blade and a cutting movement. FIG. 8A is a cross-sectional view illustrating the cutting unit 230 and a pinching member 221 in a transverse direction of the blade rubber. FIG. 8B is an enlarged view illustrating the vicinity of a blade 231.

The cutting device 200 of the blade rubber includes a pinching member 221 of a lip portion as a blade rubber fixing member that fixes the blade rubber 10. The pinching member 221 pinches the lip portion 3 in the transverse direction of the blade rubber to fix the blade rubber. For example, the first side surface 5 and the second side surface 6 in FIG. 1B are pinched. That is, the pinching member 221 pinches the lip portion 3 from both sides of the lip portion 3 in a cross-sectional view in a direction orthogonal to the longitudinal direction of the blade rubber.

In FIG. 6, the pinching member 221 is fixed on a pedestal 216 by a holding member 215 that has an L-shaped cross section in the longitudinal direction of the blade rubber. As illustrated in FIG. 8B (enlarged view of the right side) and FIG. 9B, the pinching member 221 is located at a position where at least a portion (end A) where the blade 231 enters the lip portion 3 can be pinched. In the drawing, the pinching member 221 pinches the entire area of the lip portion 3 in the longitudinal direction from both sides including a portion entered by the blade 231. A position of the pinching member relative to the blade rubber is fixed.

The cutting device 200 of the blade rubber includes a blade 231 for cutting the tip of the lip portion 3 in the longitudinal direction of the blade rubber 10. For example, as illustrated in FIGS. 6, 7A, and 7B, the cutting device 200 of the blade rubber may include the cutting unit 230, and the cutting unit 230 may include the blade 231 (not illustrated in FIG. 6).

The cutting unit 230 can be moved in the longitudinal direction of the blade rubber 10 and the pinching member 221. In FIG. 6, the cutting unit 230 can be moved along a rail 217 that guides movement. The movement of the cutting unit 230 is driven by, for example, an electric cylinder, a motor, or the like. Here, the cutting unit 230 may be configured to be manually moved. The cutting unit 230 and the pinching member 221 may not be in contact with each other so that the cutting unit 230 can be easily moved.

FIGS. 7A and 7B are cross-sectional views from above of the cutting unit 230 in the cutting device 200 of the blade rubber. FIG. 7A is an enlarged view illustrating the vicinity of the cutting unit 230. FIG. 7B is an overall view including the pinching member 221. The cutting unit 230 including the blade 231 moves from the end A to the end B in the direction of an arrow in the drawing in the longitudinal direction of the blade rubber 10. The blade 231 is inserted into the lip portion 3 from the side of the tip of the lip portion 3 at the end A that is one end in the longitudinal direction of the blade rubber 10, and is relatively moved toward the end B that is the other end in the longitudinal direction to cut a part of the tip of the lip portion 3. By performing the cutting in this way, it is possible to remove worn and deteriorated portions and obtain a regenerated blade rubber.

Although the illustrated cutting device 200 has an embodiment in which the blade 231 (the cutting unit 230)

moves, it is sufficient that the blade 231 can relatively move from the end A to the end B. That is, the cutting device 200 may have an embodiment in which the cutting unit 230 including the blade 231 is fixed, and the pinching member 221 to which the blade rubber 10 is fixed moves.

As illustrated in FIGS. 7A and 7B, the cutting device 200 may include a biasing member 241 that comes into contact with the side of the tip of the lip portion 3 at the end B of the lip portion 3 and biases the lip portion toward the end A. The biasing member 241 is, for example, a plate-like member and is inserted into a gap of the pinching member 221. The biasing member 241 presses the end B of the lip portion in the direction of the end A from the end of the pinching member 221 by an elastic member 242 such as a spring.

As illustrated in FIGS. 6, 8A, and 8B, the cutting device 200 may include a pressing member 251 that presses the tip of the lip portion 3 toward the base portion 1 of the blade rubber. The pressing member 251 presses the tip of the lip portion 3 toward the base portion 1 in advance of relative movement of the blade 231 from the end A to the end B. For example, as illustrated in FIGS. 6 and 8A, the pressing member 251 is provided in the cutting unit 230 and can move in accordance with the movement of the blade 231.

By using the cutting device 200, it is possible to curb deformation of the cut surface of the lip portion 3 and obtain a more accurately regenerated blade rubber.

4. Configuration of Blade Rubber

In the blade rubber, desirably, a contact width W is within a certain range and a contact angle θ is within a certain range when the blade rubber is pressed against the wiping target by a predetermined force.

Specifically, the contact width W is desirably in a range from 1.0 μm to 20.0 μm when an arm pressing force of the wiper arm is 18 N/m. The contact width W is preferably in a range from 1.1 μm to 15.0 μm, more preferably in a range from 1.2 μm to 10.0 μm, still more preferably in a range from 1.2 μm to 6.5 μm, and further still more preferably in range from 1.2 μm to 5.0 μm. The contact width W is a width of a contact portion between the blade rubber and the wiping target (here, a glass flat plate) in a direction orthogonal to the longitudinal direction of the blade rubber.

More specifically, measurement of the contact width W is performed under the following conditions. First, the arm pressing force of the wiper arm is set to 18 N/m, and the lip portion of the wiper blade is brought into contact with the first surface of the glass flat plate. Then, the wiper blade is moved by 50 cm in a direction orthogonal to the longitudinal direction of the blade rubber in a direction A from a first point P1 to a second point P2 on the first surface of the glass flat plate at a speed of 1.65 m/sec, and the contact width W is observed in a stopped state.

The arm pressing force of 18 N/m is a highest pressing force per length of the blade under the test conditions shown in JIS D 5710:1998. Therefore, the lip portion is particularly strongly pressed by wiping, so that a contact angle tends to decrease and the contact width tends to increase. The speed of 1.65 m/sec corresponds to an intermediate speed among speeds measured in the central part (a zone M in JIS D 5710:1998) of the wiper blade in an actual automobile distributed in Japan.

The contact angle θ is preferably in a range from 20° to 80°, more preferably in a range from 40° to 78°, and still more preferably in a range from 60° to 75°. The contact angle θ is an angle formed between a specific position of the lip portion to be observed and the glass flat plate, and is specifically measured by the following method.

First, the arm pressing force of the wiper arm is set to 18 N/m, and the lip portion of the wiper blade is brought into contact with the first surface of the glass flat plate. Then, the wiper blade is moved at a speed of 1.65 m/sec in a direction from the first point P1 to the second point P2 on the first surface of the glass flat plate by 50 cm in a direction orthogonal to the longitudinal direction of the blade rubber and stopped. In this state, the blade rubber is observed from the side surface in the longitudinal direction thereof at a magnification of 200 times using an optical microscope. Of the contact portion (contact region) between the lip portion and the glass flat plate, a segment farthest from P1 is defined as a point Q1, a perpendicular is drawn to the first surface of the glass flat plate at a position of 200 μm from the point Q1 in the direction A, and a first intersection of the perpendicular and the lip portion is defined as a point Q2. At this time, an angle formed by a straight line connecting the points Q1 and Q2 and the first surface of the glass flat plate is defined as θ.

The material of the lip portion including the tapered portion is not particularly limited as long as the contact width W and the formed angle θ can be adapted to the above definition. Specifically, for example, the lip portion preferably contains polyurethane that is excellent in mechanical properties and easily achieves the contact width W and the formed angle θ. It is easy to achieve the definition of an average value and a coefficient of variation in an elastic modulus of polyurethane.

The polyurethane is preferably a polyurethane elastomer. A polyurethane elastomer is obtained mainly from raw materials such as polyols, chain extenders, polyisocyanates, catalysts, and other additives. The polyurethane elastomer is a block copolymer composed of a hard segment and a soft segment. The hard segment is generally composed of polyisocyanates and a chain extender containing a short-chain diol. On the other hand, soft segments are generally composed of long-chain polyols such as polyester polyols, polyether polyols and polycarbonate polyols, and polyisocyanates.

In order to achieve the above-described definition of the contact width W, the formed angle θ, the average value of

the values of the elastic modulus, and the coefficient of variation in the elastic modulus, for example, it is possible to use the characteristics of the block copolymer including the hard segment and the soft segment.

Polyurethane of the related art has a hard segment in which a portion where urethane bonds are aggregated by interaction is further aggregated. The aggregated portion of the urethane bond portion has a relatively large hard segment that is further aggregated. Therefore, according to the study of the present inventors, the wiper blade produced using such polyurethane does not satisfy at least one of the contact width W and the formed angle θ, and an average value of the values of the elastic modulus and the coefficient of variation in the elastic modulus according to the present disclosure. That is, since polyurethane of the related art has a relatively large hard segment, it is difficult to set the coefficient of variation in the elastic modulus at 210,000 points to 17.6% or less using a scanning probe microscope according to the present disclosure.

Here, in the case of polyurethane in which an amount of the hard segment itself is small, it is considered that further aggregation of the aggregated portion of the urethane bond is curbed, and the coefficient of variation can be curbed to be small. However, in this case, it is difficult to set the average value of the values of the elastic modulus to 15.0 MPa or more, and it becomes difficult to satisfy the contact width W and the formed angle 0.

The lip portion satisfying physical properties according to the present disclosure can be formed, for example, using polyurethane in which the hard segments are dispersed finely and uniformly. Such polyurethane will be described below.

As an example, by using a diisocyanate or a trifunctional or higher polyfunctional isocyanate, and a diol or a trifunctional or higher polyfunctional alcohol as a urethane raw material in an appropriate concentration range, it is possible to curb aggregation of the hard segments and obtain polyurethane in which hard segments are dispersed finely and uniformly.

Specifically, for example, it is preferable to use, as a urethane raw material, at least one of an alcohol containing a trifunctional or higher polyfunctional alcohol and an isocyanate compound containing a trifunctional or higher polyfunctional isocyanate.

It is also preferable to use, as the urethane raw material, an alcohol containing at least one selected from a diol and a trifunctional or higher polyfunctional alcohol and an isocyanate compound containing a trifunctional or higher polyfunctional isocyanate.

It is also preferable to use, as a urethane raw material, an alcohol containing a trifunctional or higher polyfunctional alcohol and an isocyanate compound containing a diisocyanate and a trifunctional or higher polyfunctional isocyanate.

In particular, it is preferable to use, as the urethane raw material, a trifunctional or higher polyfunctional isocyanate and a trifunctional or higher polyfunctional alcohol.

In the polyurethane obtained as a reactant with the trifunctional or higher polyfunctional isocyanate and the trifunctional or higher polyfunctional alcohol, orientation of the molecules is curbed by steric hindrance, and the aggregation of the hard segments is more reliably curbed. Therefore, polyurethane is suitable for achieving the contact width W and the formed angle θ, and the elastic modulus and the coefficient of variation according to the present disclosure.

When the soft segment portion has, for example, a linear alkylene structure, crystallinity is enhanced by stacking the soft segments. As a result, the hard segments are less likely to be dispersed. Therefore, it is also effective to introduce an alkylene structure that has a side chain portion into the soft segment portion in order to curb the aggregation of the hard segments. Specifically, for example, the introduction of a substructure as represented by the following structural formulae (i) to (iv) into the soft segment portion between two urethane bonds makes effective for miniaturization of a hard segment.

$$-CH_2-CH(CH_3)-CH_2-CH_2-O- \quad (i)$$

$$-CH_2-CH_2-CH(CH_3)-CH_2-O- \quad (ii)$$

$$-CH_2-CH(CH_3)-O- \quad (iii)$$

$$-CH(CH_3)-CH_2-O- \quad (iv)$$

The structures of the structural formulae (i) and (ii) are structures generated by ring-opening polymerization of 3-methyltetrahydrofuran and are substantially the same. The structures of the structural formulae (iii) and (iv) are structures generated by ring-opening polymerization of 1,2-propylene oxide, and are substantially the same. A urethane resin that has these structures between two adjacent urethane bonds is obtained by reacting a polyether polyol or a polyester polyol having these structures with isocyanate. Here, when a bifunctional alcohol (diol) and a bifunctional isocyanate (diisocyanate) are used as the urethane raw materials, it is usually difficult to disperse the hard segments finely. However, by introducing the above-mentioned substructure into the soft segment portion, the hard segments can be finely dispersed even when a diol and a diisocyanate are used as the urethane raw material. As a result, it is possible to obtain polyurethane

which provides a wiper blade which satisfies the parameters according to the present disclosure.

As a method of curbing crystallization due to stacking of the soft segments and preventing aggregation of the hard segments other than introducing the side chains into the soft segment portion described above, a method of using two or more types of alcohols having different carbon numbers in the linear portion as the alcohol of the urethane raw material can be mentioned. In the polyurethane obtained by using two or more types of alcohols having different carbon numbers in the linear portion, even if the soft segment portion has a linear alkylene structure, crystallization due to stacking of the soft segments can be curbed by the different carbon numbers. Since the carbon numbers in the soft segment portion are different, aggregation of the urethane bond portion is curbed, which can prevent aggregation of the hard segments. Accordingly, even when a diol having a linear alkylene structure in the molecule and a diisocyanate are used as a urethane raw material, it is possible to miniaturize the hard segments by using a plurality of types of diols having different carbon numbers in the linear alkylene structure as the diol. As a result, it is possible to obtain polyurethane which provides a wiper blade which satisfies the parameters according to the present disclosure. Examples of the plurality of types of diols include a combination of a polybutylene adipate polyester polyol and a polyhexylene adipate polyester polyol.

Examples of the alcohol include the following alcohols:

polyester polyols such as polyethylene adipate polyester polyols, polybutylene adipate polyester polyols, polyhexylene adipate polyester polyols, (polyethylene/polypropylene) adipate polyester polyols, (polyethylene/polybutylene) adipate polyester polyols, (polyethylene/polyneopentylene) adipate polyester polyols; polycaprolactone-based polyols obtained by ring-opening polymerization of caprolactone; polyether polyols such as polyethylene glycols, polypropylene glycols, and polytetramethylene ether glycols; and polycarbonate diols. These can be used singly alone or in combination of two or more types.

As described above, it is preferable to use two or more types of polyols having different carbon numbers in the linear portion (alkylene chain) as the alcohol because urethane in which crystallization of the soft segment is curbed and aggregation of the hard segments is curbed can be obtained. In this case, for example, it is preferable to use at least two selected from a group consisting of polyester polyols such as polyethylene adipate polyester polyol, polybutylene adipate polyester polyol, polyhexylene adipate polyester polyol, (polyethylene/polypropylene) adipate polyester polyol, (polyethylene/polybutylene) adipate polyester polyol, and (polyethylene/polyneopentylene) adipate polyester polyol.

As the chain extender, a diol capable of extending a polyurethane elastomer chain or a trifunctional or higher polyfunctional alcohol can also be used.

Examples of the diol include the following:

ethylene glycol (EG), diethylene glycol (DEG), propylene glycol (PG), dipropylene glycol (DPG), 1,4-butanediol (1,4-BD), 1,6-hexanediol (1,6-HD), 1,4-cyclohexanediol, 1,4-cyclohexanedimethanol, xylylene glycol (terephthalyl alcohol), and triethylene glycol. These can be used singly alone or in combination of two or more types.

Examples of the trifunctional or higher polyfunctional alcohol include trimethylolpropane (TMP), glycerin, pentaerythritol (PEN), and sorbitol. These can be used singly alone or in combination of two or more types.

One method of improving the elastic modulus of the polyurethane elastomer is to introduce a crosslinked structure. As a method of introducing crosslinking, it is preferable to use a trifunctional or higher polyfunctional alcohol as a chain extender. An introduction of a branched structure into the polyurethane by use of a trifunctional or higher polyfunctional alcohol can curb crystallization of the polyurethane and further curb aggregation of the hard segments. Here, as the polyfunctional alcohol, a trifunctional alcohol is preferably used from the viewpoint of curbing an excessive increase in hardness due to an excessively high degree of crosslinking of the polyurethane. Among them, a triol having a methylene skeleton next to a hydroxyl group and capable of having a crosslinked structure that is molecularly structurally flexible is preferable because the triol has an effect of further curbing the crystallinity of the hard segments. Examples of such triols include trimethylolpropane (TMP) and glycerin.

Examples of the isocyanate compound include the following compounds:

4,4'-diphenylmethane diisocyanate (4,4'-MDI), polymeric MDI, 2,4-tolylene diisocyanate (2,4-TDI), 2,6-tolylene diisocyanate (2,6-TDI), xylene diisocyanate (XDI), 1,5-naphthylene diisocyanate (1,5-NDI), p-phenylene diisocyanate (PPDI), hexamethylene diisocyanate (HDI), isophorone diisocyanate (IPDI), 4,4'-dicyclohexylmethane diisocyanate (hydrogenated MDI), tetramethylxylene diisocyanate (TMXDI), carbodiimide-modified MDI, triphenylmethane-4,4',4"-triisocyanate (TTI), and tris(phenyl isocyanate) thiophosphate (TPTI).

Among them, 4,4'-MDI in which two isocyanate groups have equivalent reactivity and high mechanical properties are obtained is preferable. It is preferable to use a trifunctional or higher polyfunctional isocyanate in combination. By using a trifunctional or higher polyfunctional isocyanate, a branched structure can be introduced into polyurethane, and it is effective for further curbing aggregation of the hard segments. Since a denser crosslinked structure can be introduced into polyurethane, the contact property of the lip portion to a cleaning target member can be further stabilized. As a result, unwiped portions and wiping unevenness in wiping of the cleaning target member can be curbed more effectively.

Examples of the trifunctional or higher polyfunctional isocyanate include at least one selected from the group consisting of triphenylmethane-4,4',4''-triisocyanate (TTI), tris(phenyl isocyanate)thiophosphate (TPTI), and polymeric MDI. Among them, tris(phenyl isocyanate)thiophosphate (TPTI) and polymeric MDI can be used more appropriately. The

isocyanates have a methylene group or an ether group between a plurality of NCO groups, and can appropriately maintain a distance between a plurality of urethane bonds. Therefore, it is advantageous for curbing aggregation of hard segments.

Here, the polymeric MDI is represented by the following Chemical Formula (1) and Chemical Formula (1)'. In Chemical Formula (1)', n is preferably from 1 to 4. Chemical Formula (1) is a case where n is 1 in Chemical Formula (1)'.

[Chem 1]

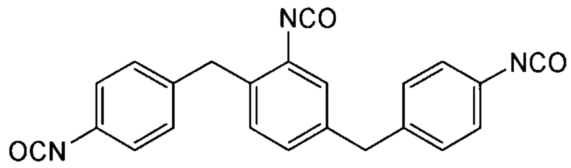

(1)

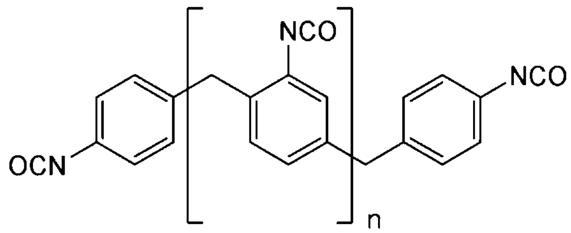

(1)'

When the lip portion according to the present disclosure contains polyurethane which is a reactant of a raw material composition containing an isocyanate compound that contains a diisocyanate and a trifunctional or higher polyfunctional isocyanate and an alcohol that contains a trifunctional or higher polyfunctional alcohol, the lip portion preferably has the following physical properties.

That is, it is assumed that line segments having a distance of 0.5 mm from the first edge and the second edge are drawn on the first side surface and the second side surface of the lip portion in parallel with the first and second edges, respectively. Then, assuming that L' is a length of the line segment, and the points of 1/8L', 1/2L', and 7/8L' from one end side on the line segment are referred to as P0', P1', and P2', respectively.

A sample sampled at each of the P0', the P1', and the P2' of the first and second side surfaces is heated to a ramp rate of 10°C/s and 1000°C using a mass spectrometer of a direct sample introduction scheme that heats and vaporizes the sample in an ionization chamber and ionizes sample molecules. A detection amount of all ions obtained as a result is set as M1, and the integrated intensity of the peak of the extracted ion thermogram corresponding to a range of a m/z value derived from a trifunctional or higher polyfunctional isocyanate is set as M2. At this time, M2/M1 on the first side surface and/or the second side surface is preferably in a range of 0.0010 to 0.0150. In particular, M2/M1 is more preferably in a range of 0.0030 to 0.0150.

When integrated intensity of a peak of an extracted ion thermogram corresponding to a range of an m/z value derived from diisocyanate is set as M3, M3/M1 on the first side surface and/or the second side surface is preferably in a range of 0.0200 to 0.1100, and particularly more preferably in a range of 0.0380 to 0.0760. When M2/M1 and M3/M1 are in the above ranges, an appropriate amount of a structure derived from a trifunctional or higher polyfunctional isocyanate having low crystallinity is introduced into polyurethane. As a result, aggregation of hard segments is curbed, and the hard segments can be dispersed more finely and uniformly. Excessive development of the crosslinked structure in polyurethane is curbed, and the contact width W and the formed angle θ are easily controlled. The average value of the elastic modulus can be easily adjusted within a range from 15.0 MPa to 470.0 MPa.

Further, M2/M3 is preferably in a range from 0.0130 to 0.3000. M2/M3 is a parameter representing a ratio between a structural portion derived from diisocyanate and a structural portion derived from a trifunctional or higher polyfunctional isocyanate in the isocyanate-derived structure of the polyurethane, and when M2/M3 is within the above range, it is possible to obtain polyurethane in which an excessive increase in elastic modulus is curbed and aggregation of hard segments is further curbed.

Here, when the polyurethane is a polyurethane produced using the polymeric MDI represented by Chemical Formula (1)' as a trifunctional or higher polyfunctional isocyanate, in the extracted ion thermogram obtained by the mass spectrometry described above, M2 may be a sum of integrated intensities of peaks corresponding to each of the range in which the m/z value derived from n=1 of the structure represented by Chemical Formula (1)' is in a range of 380.5 to 381.5, the range in which the m/z value derived from n=2 is a range of 511.5 to 512.5, the range in which the m/z value derived from n=3 is a range of 642.5 to 643.5, and the range in which the m/z value derived from n=4 is in a range of 773.5 to 774.5.

When the polyurethane is polyurethane in which 4,4'-MDI represented by Chemical Formula (2) is used as one of raw materials as a diisocyanate, the integrated intensity of a peak corresponding to the range in which the m/z value

derived from the structure represented by Chemical Formula (2) is 249.5 to 250.5 in the ion thermogram obtained by the mass spectrometry may be set as M3.

[Chem 2]

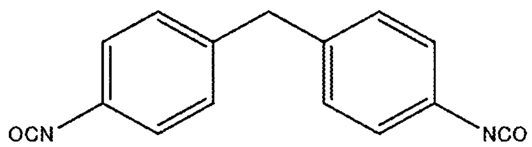

(2)

Further, when the lip portion of the wiper device according to an aspect of the present disclosure includes polyurethane which is a reactant of a raw material composition containing an isocyanate compound containing a trifunctional or higher polyfunctional isocyanate and an alcohol containing a trifunctional or higher polyfunctional alcohol, the lip portion preferably has the following physical properties. That is, when it is assumed that a line segment having a distance of 0.5 mm from the first edge and the second edge is drawn on the first and second side surfaces of the lip portion in parallel with the first and second edges, respectively, a length of the line segment is L', and points of 1/8L', 1/2L', and 7/8L' from one end side on the line segment are P0', P1', and P2', respectively. The sample sampled at each of the P0', the P1', and the P2' of the first and second side surfaces is measured by pyrolysis GC/MS (gas chromatography and mass spectrometry). A concentration of the component derived from the trifunctional or higher polyfunctional alcohol in the polyurethane is preferably in a range of 0.04 mmol/g to 0.39 mmol/g, more preferably in a range of 0.14 mmol/g to 0.39 mmol/g, and still more preferably in a range of 0.22 mmol/g to 0.39 mmol/g.

When a concentration of a component derived from the trifunctional or higher polyfunctional alcohol is 0.04 mmol/g or more, polyurethane can be one in which the aggregation of the hard segments is more reliably curbed. When a concentration of a component derived from the trifunctional or higher polyfunctional alcohol is 0.39 mmol/g or less, excessive development of the crosslinked structure in polyurethane can be curbed, and the elastic modulus can be prevented from becoming too high. Therefore, a tapered portion having the above-described physical properties can more easily satisfy the above-described definition of the contact width, the formed angle θ, the average value of the values of the elastic modulus, and the coefficient of variation in the elastic modulus. A concentration of the trifunctional or higher polyfunctional alcohol in polyurethane is calculated by the following Formula (2).

concentration (mmol/g) of trifunctional or higher polyfunctional alcohol = [Amount of trifunctional or higher polyfunctional alcohol (g)/molecular weight of trifunctional or higher polyfunctional alcohol × 1000]/[Mass (g) of polyurethane]     Formula (2):

The urethane raw material can contain a catalyst for accelerating the reaction of the isocyanate compound and the alcohol. As the catalyst, a commonly used catalyst for curing a polyurethane elastomer can be used. Examples of the catalyst include a tertiary amine catalyst and a tertiary amino alcohol. In particular, the following catalysts can be exemplified.

Amino alcohols such as dimethylethanolamine, N,N,N'-trimethylaminopropylethanolamine, and N,N'-dimethylhexanolamine; trialkylamine such as triethylamine; and tetraalkyldiamines such as N,N,N'N'-tetramethyl-1,3-butanediamine; and triethylenediamine, piperazine-based compounds, and triazine-based compounds.

Examples of the tertiary amino alcohol include 2-(dimethylamino) ethanol, 3-(dimethylamino) propanol, 2-(dimethylamino)-1-methylpropanol, 2-{2-(dimethylamino) ethoxy} ethanol, 2-{2-(diethylamino) ethoxy} ethanol, and 2-[{2-(dimethylamino) ethyl} methylamino] ethanol.

Organic acid salts of metals, such as potassium acetate, and potassium alkali octyrate can also be used. Further, metal catalysts generally to be used for the urethanization, for example, dibutyltin dilaurate, can also be used. These can be used singly alone or in combination of two or more thereof.

Among them, temperature-sensitive catalysts such as 2-{2-(diethylamino) ethoxy} ethanol and 2-[{2-(dimethylamino) ethyl} methylamino] ethanol can react the polyfunctional isocyanate described above with a polyol with extremely high efficiency, and can form a higher order crosslinked structure in polyurethane better.

Additives such as a pigment, a plasticizer, a waterproof agent, an antioxidant, an ultraviolet absorber, a light stabilizer, and a hydrolysis inhibitor can be blended in the raw material of the blade rubber as necessary as long as the contact width W and the formed angle θ are not affected.

5. Advantageous Effects of Present Disclosure

According to the regeneration system of the present disclosure, it is expected that the blade rubber is smoothly regenerated, and the blade rubber is repeatedly regenerated and used. Accordingly, it is possible to reduce waste of resources and contribute to environmental protection.

Each party involved in the regeneration system also has the following advantages. The user of the wiper device does not replace the blade rubber with a new blade rubber when the wiping performance deteriorates, but restores the wiping performance by regeneration. Therefore, a necessary expense can be reduced. Since the user is notified of the recommended regeneration time by a seal attached to the blade rubber, by an e-mail, by an application, or the like, regeneration can be performed before the wiping performance of the wiper device extremely deteriorates, which leads to safe operation. Since a nearby regeneration facility is notified during notification of the recommended regeneration time, a regeneration request can be easily made. Since the number of regenerations for the blade rubber can be ascertained, the user can feel the contribution to an environment.

Since the user visits a regeneration service provider for blade rubber regeneration processing, an increase in sales due to purchase of other products or use of services can be expected. In addition, the regeneration facility is also notified when the user is notified of the recommended regeneration time. Therefore, a greater customer attraction effect can be expected. Further, since whether the blade rubber to be regenerated can be regenerated can be determined by measurement, work efficiency of the regeneration service provider is improved. Further, it is also an advantage that the remaining number of cuts (regenerations) can be ascertained and the user is notified of the remaining number of cuts after the regeneration processing.

6. Other Embodiments

In one embodiment, the regeneration service provider receiving a vehicle or a blade rubber may acquire the user information. An example of the user information is at least one of a vehicle number, a blade rubber model, a blade rubber individual identification number, and the remaining number of cuts for the blade rubber. The user information may be stored in a database in association with a user ID, for example, and may be acquired by a regeneration service provider that accesses the database via a computer terminal. Alternatively, the regeneration service provider may acquire information such as the remaining number of cuts for the blade rubber from a barcode (one-dimensional code), a two-dimensional code, or an RFID tag attached to the blade rubber, the wiper device, or the like. The barcode or the like may directly store the remaining number of cuts for the blade rubber or may store access information for acquiring the remaining number of cuts. Since the regeneration execution operator can refer to these pieces of user information, the regeneration processing can be smoothly performed. By comparing the acquired user information with the wiper device (blade rubber) to be regenerated, the regeneration execution operator can prevent an error in taking the regeneration target.

Each step of the regeneration processing may be automatically performed by a machine, or an operation by a person (a regeneration execution operator, a user, or the like) may intervene. All of some of the steps may be performed by a person.

The present disclosure is not limited to the above embodiments, and various changes and modifications can be made without departing from the spirit and scope of the present invention. Accordingly, the following claims are appended to make the scope of the present disclosure public.

The present application claims priority based on Japanese Patent Application No. 2023-077450 filed on May 9, 2023, the entire contents of which are incorporated herein by reference.

[Reference signs list]

10: Blade rubber, 20:Wiper blade
41: Lip portion tip length acquisition unit, 42: Cutting instruction unit, 47: notification unit
S102: Measurement step, S103: Cutting possibility determination step, S104: Cutting step

## Claims

**1.** A wiper blade regeneration method comprising:

a measurement step of measuring a length of a tip of a wiper blade;
a determination step of determining whether the tip of the wiper blade is cuttable based on the length measured in

the measurement step; and
a removal step of removing at least a part of the tip of the wiper blade when determination is made that the tip of the wiper blade is cuttable in the determination.

2. The wiper blade regeneration method according to claim 1, further comprising a first notification step of issuing a notification that regeneration is not possible when determination is made in the determination step that the tip of the wiper blade is not removable.

3. The wiper blade regeneration method according to claim 1 or 2, further comprising a second notification step of issuing a notification about a remaining number of times regeneration is possible based on a length of the tip after a removal when at least the part of the tip of the wiper blade has been removed in the removal step.

4. The wiper blade regeneration method according to claim 3, wherein the second notification step comprises at least any of:

displaying, on a display, the remaining number of times regeneration is possible ;
printing, on a label, the remaining number of times regeneration is possible;,
outputting a barcode or a two-dimensional code including the remaining number of times regeneration is possible, as information; and
writing, as information, in an RFID tag the remaining number of times regeneration is possible.

5. The wiper blade regeneration method according to claim 3 or 4, wherein the second notification step also issues a notification about the number of regenerations of the wiper blade.

6. The wiper blade regeneration method according to any one of claims 1 to 5, further comprising a third notification step of issuing a notification about a length of the tip after the removal when at least the part of the tip of the wiper blade has been removed in the removal step.

7. The wiper blade regeneration method according to claim 6, wherein the length of the tip of the wiper blade after the removal is obtained

by measuring the length of the tip of the wiper blade after the removal after the removal step, or
by subtracting a cutting margin in the removal step from the length of the tip of the wiper blade measured in the measurement step.

8. The wiper blade regeneration method according to any one of claims 1 to 7, further comprising a confirmation step of confirming wiping performance of the wiper blade after the removal when at least the part of the tip of the wiper blade has been removed in the removal step.

9. The wiper blade regeneration method according to claim 8, wherein, in the confirmation step, the wiping performance is determined based on a variation in the length of the tip of the wiper blade after the removal.

10. The wiper blade regeneration method according to claim 8 or 9, wherein, in the confirmation step, the wiping performance is determined based on a cleaning result of a wiping target by using the wiper blade after the removal.

11. The wiper blade regeneration method according to any one of claims 1 to 10, further comprising a fourth notification step of issuing a notification about a next recommended regeneration time when at least a part of the tip of the wiper blade has been removed in the removal step.

12. The wiper blade regeneration method according to any one of claims 1 to 11, further comprising a fifth notification step of notifying a user of a vehicle that a recommended regeneration time of a wiper blade attached to the vehicle has arrived, before the measurement step.

13. The wiper blade regeneration method according to claim 12, wherein a notification to the user in the fifth notification step is performed via at least one selected from the group consisting of a phone, an electronic mail, an SNS, and an application of a terminal held by the user.

14. The wiper blade regeneration method according to claim 12 or 13, wherein an arrival of the recommended

regeneration time in the fifth notification step is determined based on at least one selected from the group consisting of:

a recommended regeneration time set during previous regeneration or during replacement with a new wiper blade;
a travel distance of the vehicle after previous regeneration or after replacement with a new wiper blade;
the number of operations of a wiper device in the vehicle;
a load of a drive motor of a wiper device; and
a wiped state observed by a sensor capable of observing a wiped state of a surface of a windshield by the wiper blade.

**15.** The wiper blade regeneration method according to any one of claims 12 to 14, wherein the fifth notification step comprises selecting at least one regeneration facility from among a plurality of regeneration facilities of the wiper blade, based on an attribute of the user, and notifying the user.

**16.** The wiper blade regeneration method according to any one of claims 1 to 15,

wherein, in the measurement step, the length of the tip of the wiper blade is measured in a longitudinal direction, and
in the determination step, based on a shortest length of the tip of the wiper blade, determination is made on whether the tip of the wiper blade is cuttable.

**17.** The wiper blade regeneration method according to any one of claims 1 to 16,

wherein the wiper blade includes a blade rubber and a blade stay for giving an instruction to the blade rubber,
the blade rubber includes a base portion attachable to the blade stay, a neck portion, and a lip portion rockably connected to the base portion via the neck portion, and
in the measurement step, the length of the tip is obtained by measuring a length between an end surface of the base portion and the lip portion and subtracting a length, predetermined in accordance with the blade rubber, from a measured length.

**18.** A regeneration system regenerating a wiper blade mounted on a vehicle, the regeneration system comprising:

acquisition means for acquiring a length between a base portion and a tip of the wiper blade;
determination means for determining, based on the length, whether the wiper blade is cuttable; and
a cutting device that cuts a tip of the wiper blade when the determination means determines that cutting is possible; and
notification means for issuing a notification that cutting is not possible when the determination means determines that cutting is not possible, and issuing a notification about a remaining number of times the cutting is possible, based on the length between the base portion and the tip after the cutting when the determination means has determined that cutting is possible and the cutting device has performed cutting.

**19.** A program causing a computer to execute each step of a method according to any one of claims 1 to 17.

**20.** A computer-readable information recording medium on which the program according to claim 19 is recorded.

FIG. 1A

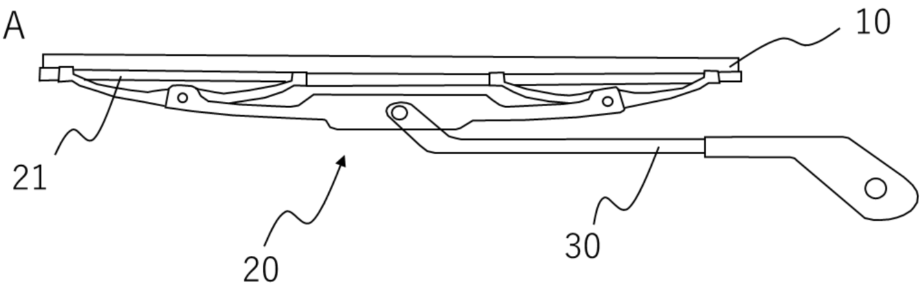


FIG. 1B

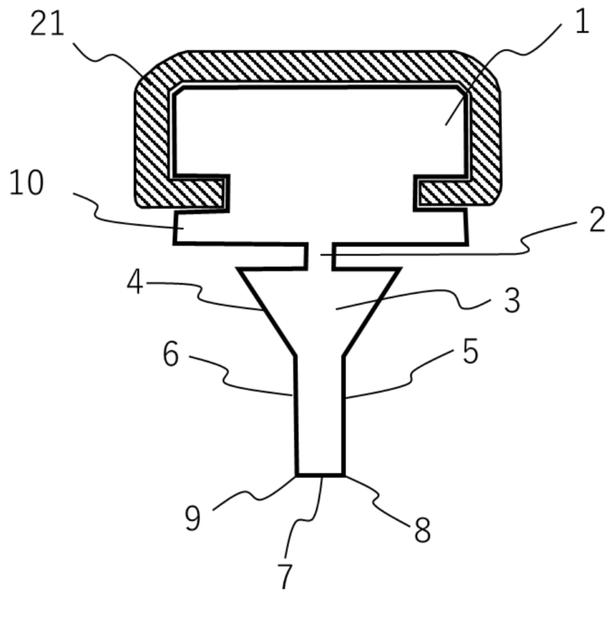

FIG. 2

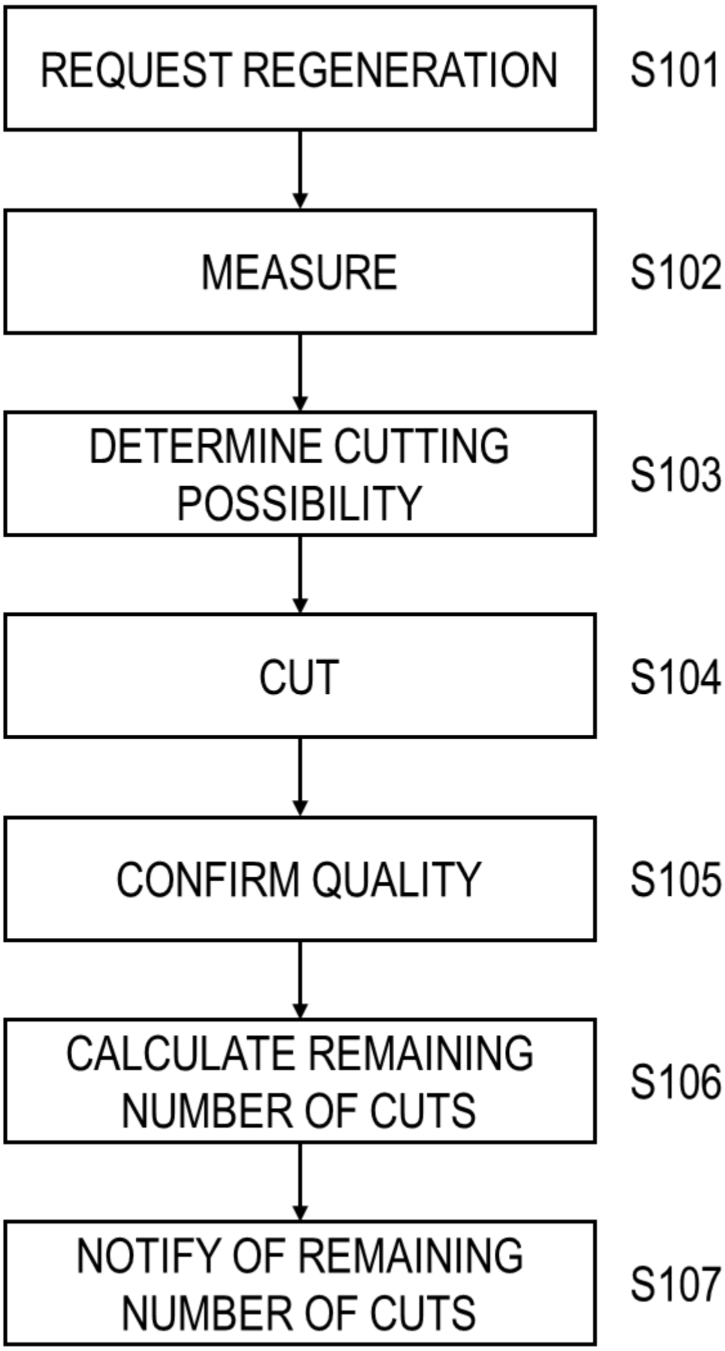
REQUEST REGENERATION
S101
MEASURE
S102
DETERMINE CUTTING POSSIBILITY
S103
CUT
S104
CONFIRM QUALITY
S105
CALCULATE REMAINING NUMBER OF CUTS
S106
NOTIFY OF REMAINING NUMBER OF CUTS
S107

FIG. 3

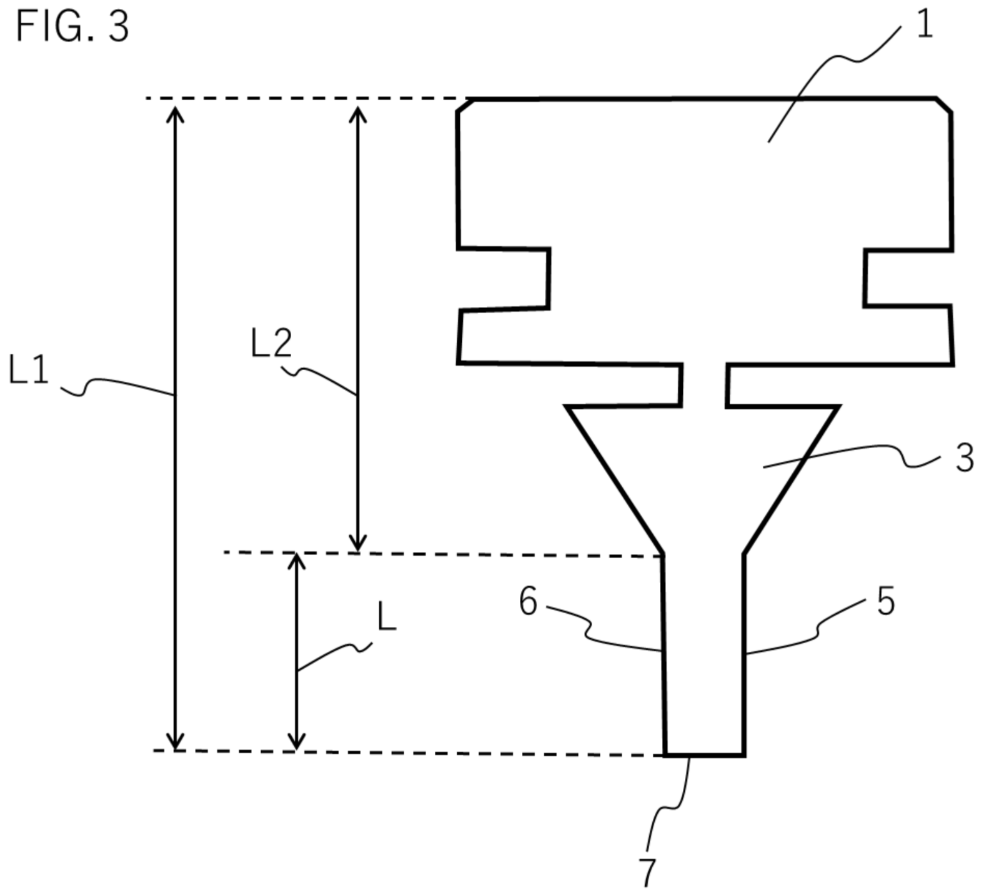

FIG. 4

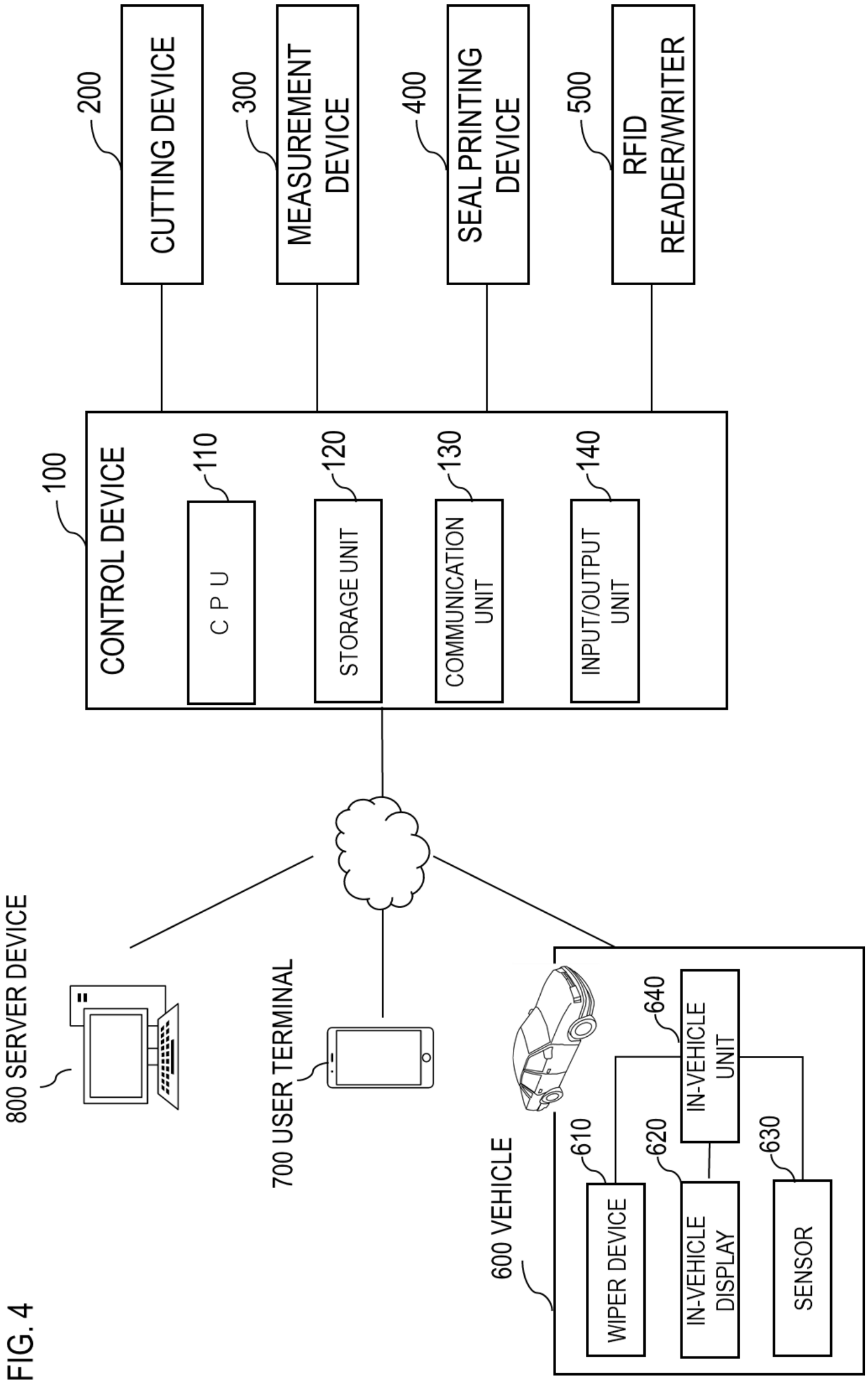
100
CONTROL DEVICE
110
C P U
120
STORAGE UNIT
130
COMMUNICATION UNIT
140
INPUT/OUTPUT UNIT
200
CUTTING DEVICE
300
MEASUREMENT DEVICE
400
SEAL PRINTING DEVICE
500
RFID READER/WRITER
800 SERVER DEVICE
700 USER TERMINAL
600 VEHICLE
610
WIPER DEVICE
620
IN-VEHICLE DISPLAY
630
SENSOR
640
IN-VEHICLE UNIT

FIG. 5

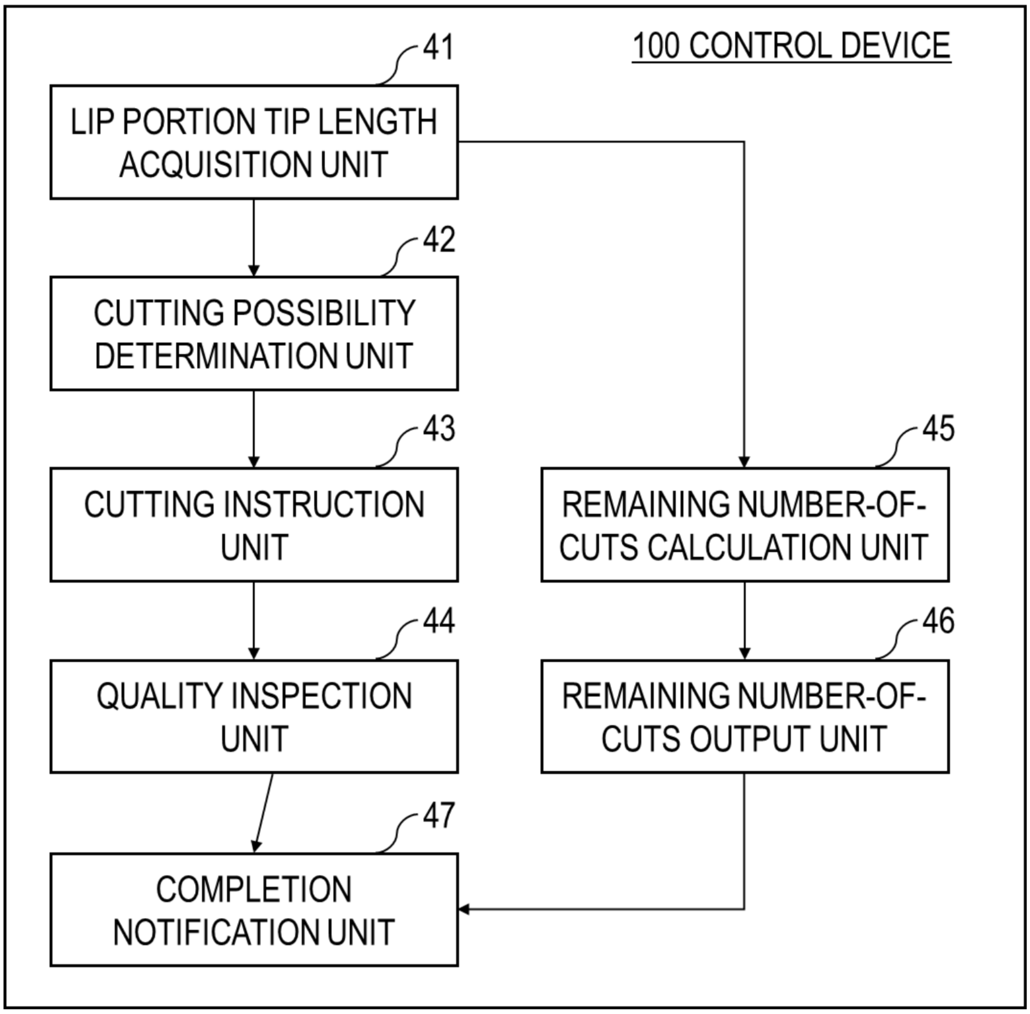
100 CONTROL DEVICE
41
LIP PORTION TIP LENGTH ACQUISITION UNIT
42
CUTTING POSSIBILITY DETERMINATION UNIT
43
CUTTING INSTRUCTION UNIT
44
QUALITY INSPECTION UNIT
47
COMPLETION NOTIFICATION UNIT
45
REMAINING NUMBER-OF-CUTS CALCULATION UNIT
46
REMAINING NUMBER-OF-CUTS OUTPUT UNIT

FIG. 6

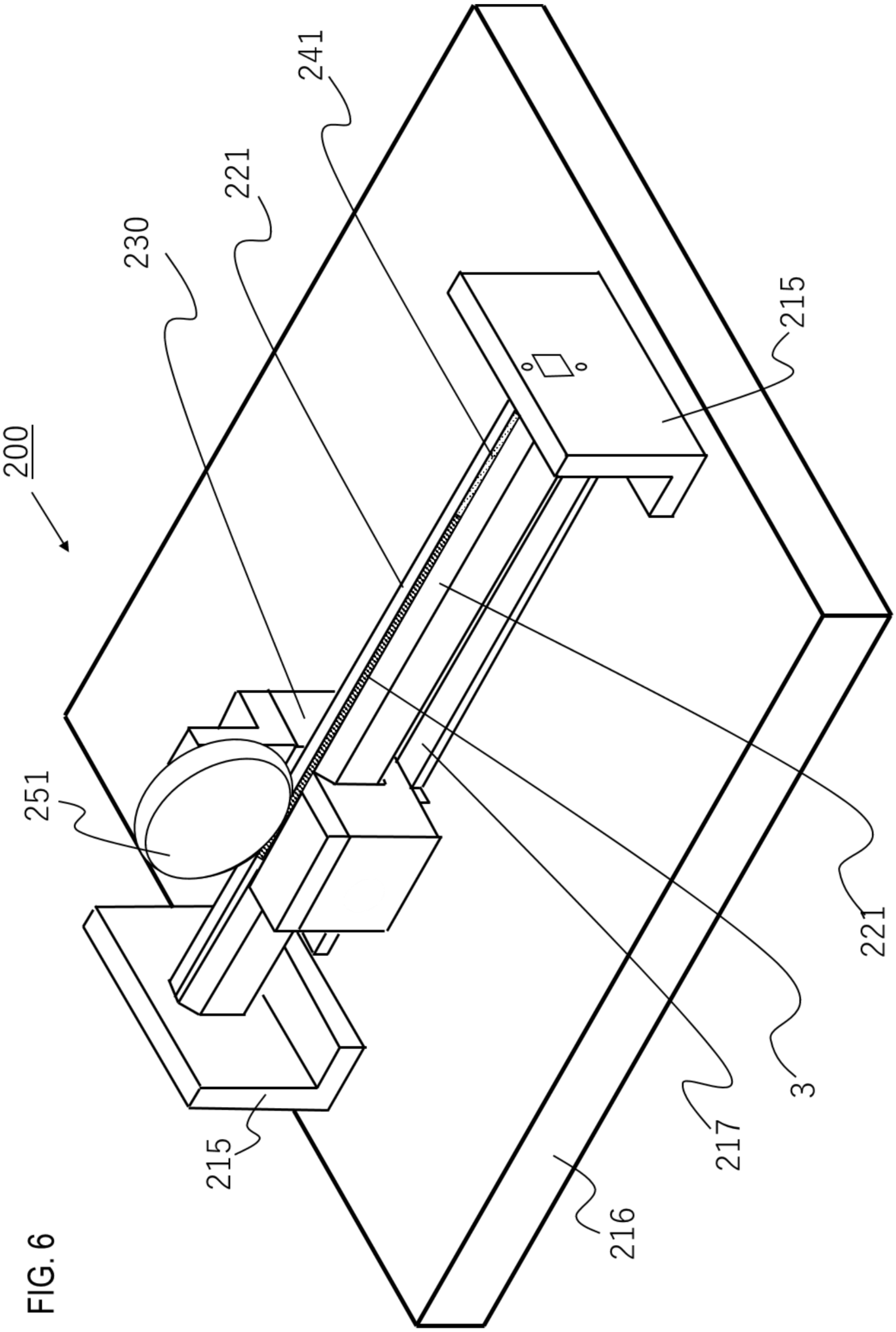

FIG. 7A

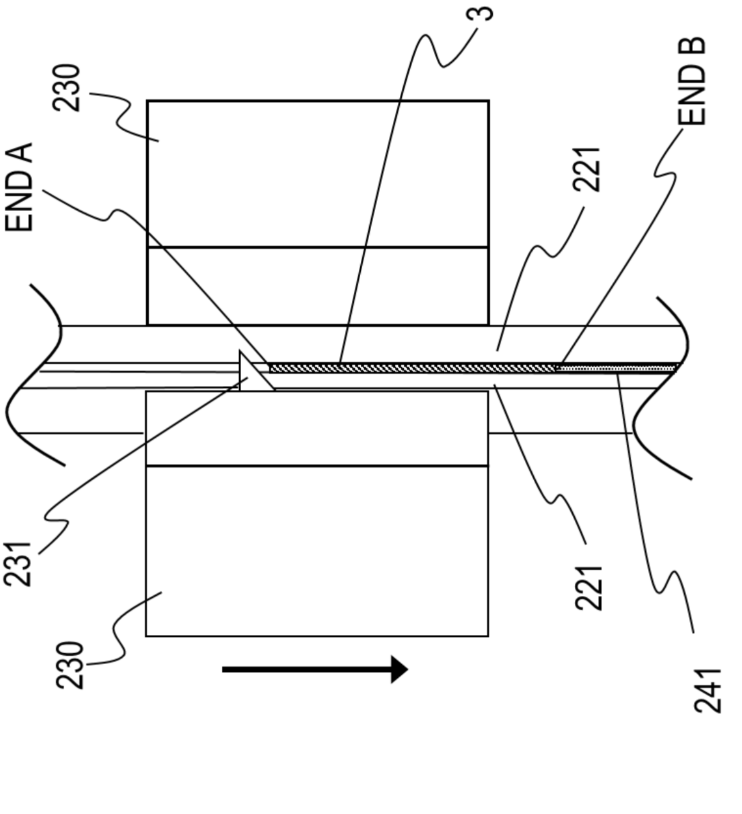
END A
230
3
END B
221
231
221
241
230

FIG. 7B

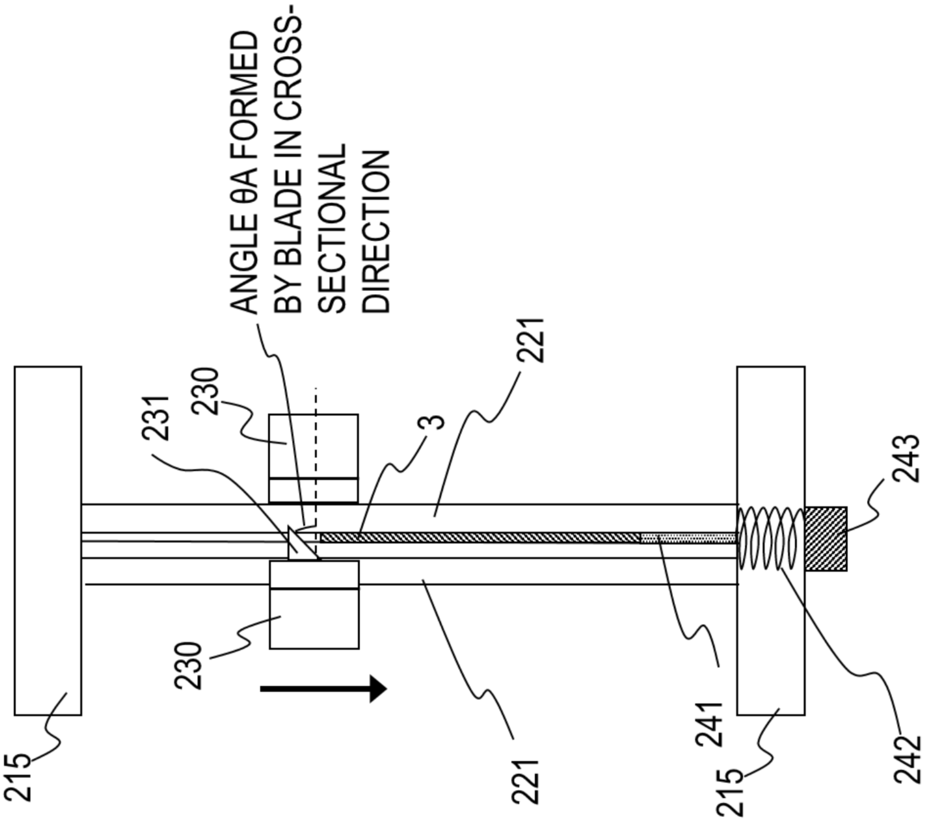
ANGLE θA FORMED BY BLADE IN CROSS-SECTIONAL DIRECTION
230
231
3
221
243
230
221
241
215
215
242

FIG. 8A

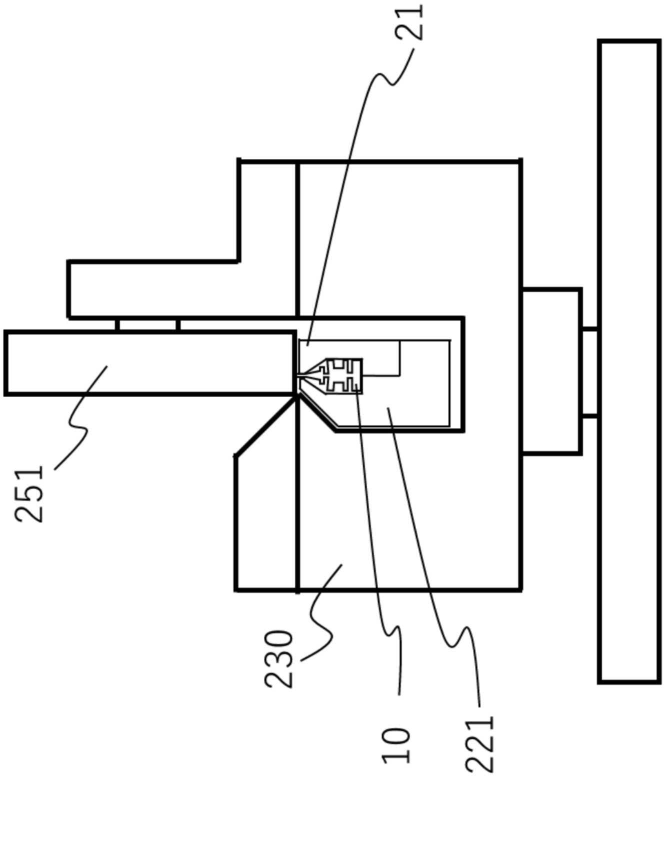


FIG. 8B

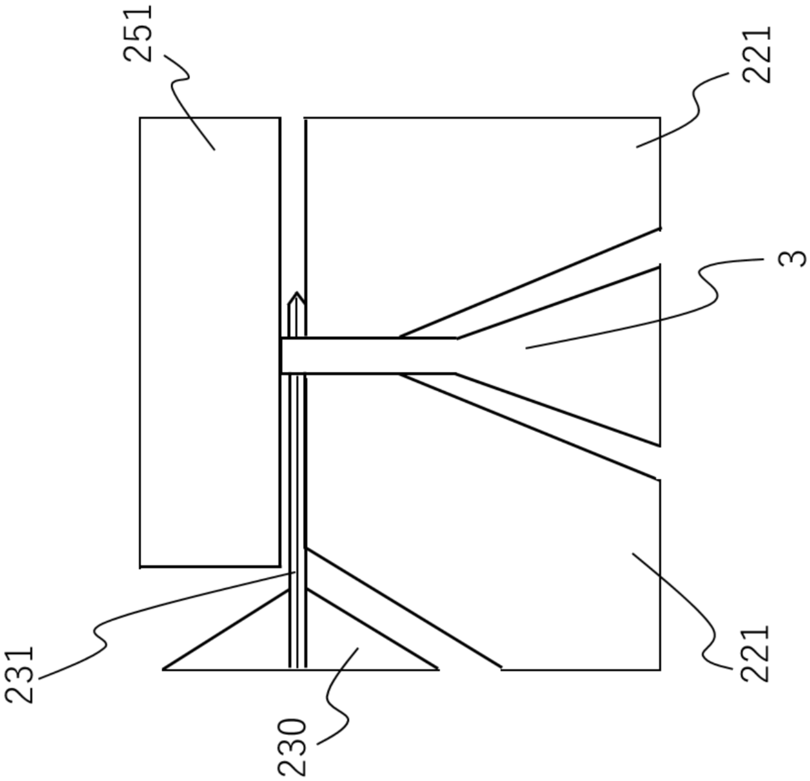

## INTERNATIONAL SEARCH REPORT

International application No. **PCT/JP2024/017086**

**A. CLASSIFICATION OF SUBJECT MATTER**

***B60S 1/38***(2006.01)i
FI: B60S1/38 Z

According to International Patent Classification (IPC) or to both national classification and IPC

**B. FIELDS SEARCHED**

Minimum documentation searched (classification system followed by classification symbols)

B26D3/00; B60S1/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-174980 A (TAMAGAWA, Masafumi) 06 July 2006 (2006-07-06) paragraphs [0010]-[0021], fig. 1-4 | 1-20 |
| A | JP 6-344253 A (MURAYAMA, Katsuhiko) 20 December 1994 (1994-12-20) paragraphs [0008]-[0010], fig. 1-5 | 1-20 |
| A | US 2006/0032057 A1 (SIEKE, Haral) 16 February 2006 (2006-02-16) paragraphs [0039]-[0055], fig. 1-24 | 1-20 |
| A | US 6026724 A (PLEIGER PLASTICS CORPORATION) 22 February 2000 (2000-02-22) column 3, line 15 to column 8, line 34, fig. 1-10 | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/017086**

| Patent document cited in search report | Publication date (day/month/year) | Patent family member(s) | Publication date (day/month/year) |
|---|---|---|---|
| JP 2006-174980 A | 06 July 2006 | (Family: none) | |
| JP 6-344253 A | 20 December 1994 | (Family: none) | |
| US 2006/0032057 A1 | 16 February 2006 | WO 2004/028761 A1<br>DE 10243690 A1<br>ES 2291671 T3 | |
| US 6026724 A | 22 February 2000 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006174980 A
- JP 2023077450 A